# EUROPÄISCHE PATENTANMELDUNG

(11) **EP 1 659 369 A2**
(43) Veröffentlichungstag der Anmeldung: **24.05.2006**
(21) Anmeldenummer: 05109373.0
(22) Anmeldetag: 10.10.2005
(51) Int. Cl.: G01C 21/34, G07B 15/00

(54) **Navigationsvorrichtung und Navigationssystem**

(30) Priorität: 18.11.2004 DE 102004055736
(71) Anmelder: SIEMENS AKTIENGESELLSCHAFT, 80333 München (DE)
(72) Erfinder: Haunschmidt, Herbert, 2201, Gerasdorf-Seyring (AT); Pohl, Alfred, 2130, Mistelbach (AT); Rauscher, Kurt, 3430, Tulln (AT)

(57) **Zusammenfassung**

Ein Navigationssystem umfasst eine Navigationsvorrichtung und eine Mautermittlungsvorrichtung, die ausgebildet ist zum Mitteilen von Mautnutzerdaten an eine Mautbetreibervorrichtung (21) und die ausgebildet ist zum Mitteilen von Mautdaten an die Navigationsvorrichtung (3). Die Navigationsvorrichtung (3) ist ausgebildet zum Ermitteln einer Route zwischen einem vorgegebenen Startpunkt und einem vorgegebenen Zielpunkt. Sie ist ferner ausgebildet zum Abfragen von Mautdaten bezüglich der ermittelten Route von der Mautermittlungsvorrichtung (5).

## Beschreibung

Die Erfindung betrifft eine Navigationsvorrichtung und ein Navigationssystem, das insbesondere geeignet ist für einen Einsatz in einem Fahrzeug.

Aus der EP 1 150 098 A1 ist ein Fahrzeugnavigationssystem bekannt mit mehreren Einheiten, die miteinander gekoppelt sind. Die Einheiten umfassen eine Ein-/Ausgabe-Einheit, eine Routenplanungseinheit und eine Positionsbestimmungseinheit. Das Navigationssystem ist ausgebildet zum Bestimmen einer Route zwischen einem Ausgangspunkt und einem Zielpunkt unter Berücksichtigung von möglichen Zwischenzielen, die beispielsweise Hotels, oder auch Verkehrsinformationen, die beispielsweise über das Radio Data System (RDS) abgefragt werden können. Ferner umfasst das Navigationssystem auch eine Datenbank mit Daten über die Entfernungen zwischen vorgegebenen Streckenabschnitten, deren zugeordnete voraussichtliche Fahrzeitdauer und eine Straßenklassifikationen. Darüber hinaus umfasst das Navigationssystem noch einen Logbuchcomputer, in dem Zeitpläne aus der Vergangenheit, aufgelaufene Rechnungen oder sonstige Kosten gespeichert sind. Abhängig von den Informationen in der Datenbank, in dem Logbuchcomputer und auch abhängig von dem RDS-System ist das Navigationssystem ausgebildet zum Ermitteln der jeweiligen Route von dem Ausgangspunkt zu dem Zielpunkt. Die einzelnen Komponenten des Navigationssystems können über Bluetooth-Schnittstellen oder auch über GSM-Schnittstellen miteinander gekoppelt sein.

Aus dem englischen Abstract JP 2003-130669-A ist ebenfalls ein Navigationssystem für Fahrzeuge bekannt, das eine Routenplanungs- und Verarbeitungseinheit und eine Alternativroutenberechnungseinheit umfasst. Die Routenplanungs- und Verarbeitungseinheit ist ausgebildet zum Ermitteln einer Route hin zu einer eingestellten Zielposition. Sie ist ferner ausgebildet zum Zuordnen von Routeninformation basierend auf Kosten, die den jeweiligen Streckenabschnitten der jeweiligen Route zugeordnet sind. Derartige Kosten sind als Autobahn oder Mautstraße offenbart.

Eine Maut-On-Board-Unit ist von der Siemens VDO Automotive AG bekannt. Sie wird unter der Bezeichnung Maut-OBU 1372 vertrieben und ist in der Produktbroschüre "Maut-OBU 1372" beschrieben. Die On-Board-Unit umfasst ein GPS-Modul, ein GPRS-Mobilkommunikationsmodem, eine integrierte DSRC Kombiantenne, eine Fahrtrichtungserkennung, Bedientasten und eine Fahrzeug-Karte für Kfz-Kennzeichen, Emissionsklasse und Standard-Achsanzahl. Koordinaten mautpflichtiger Strecken sind in der On-Board-Unit auf einem erweiterbaren Datenspeicher hinterlegt. Die On-Board-Unit ist ausgebildet zum Übermitteln von Mautnutzerdaten an ein Mauthintergrundsystem.

Die Aufgabe der Erfindung ist es, eine Navigationsvorrichtung und ein Navigationssystem zu schaffen, die einfach sind und einen komfortablen Betrieb ermöglichen.

Die Aufgabe wird gelöst durch die Merkmale der unabhängigen Patentansprüche. Vorteilhafte Ausgestaltungen der Erfindung sind in den Unteransprüchen gekennzeichnet.

Die Erfindung zeichnet sich gemäß eines ersten Aspekts aus durch eine Navigationsvorrichtung, die ausgebildet ist zum Ermitteln einer Route zwischen einem vorgebbaren Startpunkt und einem vorgebbaren Zielpunkt. Die Navigationsvorrichtung ist ferner ausgebildet zum Abfragen von Mautdaten bezüglich der ermittelten Route von einer Mautermittlungsvorrichtung. Die Mautermittlungsvorrichtung ist ausgebildet zum Mitteilen von Mautnutzerdaten an eine Mautbetreibervorrichtung und ist ausgebildet zum Mitteilen von Mautdaten an die Navigationsvorrichtung. Eine solche Mautermittlungsvorrichtung wird häufig auch als On-Board-Unit bezeichnet. Dies ermöglicht in vorteilhafter Weise eine Berücksichtigung von Mautdaten bei der jeweiligen ermittelten Route unter Nutzung einer für das Mitteilen der Mautnutzerdaten an die Mautbetreibervorrichtung ohnehin vorhandenen Mautermittlungsvorrichtung. Die Mautdaten können so mit einem sehr geringen Zusatzaufwand der Navigationsvorrichtung zur Verfügung gestellt werden. Darüber hinaus ist es auch so einfach möglich, dass die Navigationsvorrichtung Zugriff auf die jeweils aktuellen Mautdaten hat, die beispielsweise einfach von der Mautermittlungsvorrichtung von der Mautbetreibervorrichtung abgerufen werden können.

In einer vorteilhaften Ausgestaltung der Navigationsvorrichtung ist sie ausgebildet zum automatischen Auswählen einer von mehreren möglichen Routen zwischen dem vorgegebenen Startpunkt und dem vorgegebenen Zielpunkt unter Berücksichtigung der Mautdaten. Auf diese Weise ist es einfach möglich, mautbehaftete Streckenabschnitte zu meiden oder auch zu bevorzugen. Insbesondere im Falle von als Mautkosten ausgebildeten Mautdaten können so entstehende Kosten für die jeweiligen Routen genauer abgeschätzt werden.

Gemäß einer weiteren vorteilhaften Ausgestaltung der Navigationsvorrichtung ist diese ferner ausgebildet zum automatischen Auswählen einer von mehreren möglichen Routen zwischen dem vorgegebenen Startpunkt und dem vorgegebenen Zielpunkt unter Berücksichtigung von Zeitkosten. Auf diese Weise können Kosten, die der jeweiligen Route zuzuordnen sind, noch genauer bestimmt werden.

Gemäß einer weiteren vorteilhaften Ausgestaltung der Navigationsvorrichtung ist diese ferner ausgebildet zum automatischen Auswählen einer von mehreren möglichen Routen zwischen dem vorgegebenen Startpunkt und dem vorgegebenen Zielpunkt unter Berücksichtigung von Betriebskosten. Betriebskosten können beispielsweise Kosten für Kraftstoff oder auch Abnutzung eines Fahrzeugs umfassen. Durch das zusätzliche Berücksichtigen der Betriebskosten können somit die jeweiligen Kosten für die jeweiligen Routen noch genauer abgeschätzt werden.

Gemäß einer weiteren vorteilhaften Ausgestaltung der Navigationsvorrichtung ist diese ausgebildet zum Ausgeben von Mautdaten, die der jeweiligen Route zwischen dem vorgegebenen Startpunkt und dem vorgegebenen Zielpunkt zugeordnet sind. Dies ermöglicht einem Nutzer der Navigationsvorrichtung auf einfache Weise eine genaue Kenntnis zugeordneter Mautdaten und so beispielsweise eine genaue Kenntnis von Mautkosten für die jeweilige Route.

In diesem Zusammenhang ist es ferner vorteilhaft, wenn die Navigationsvorrichtung ausgebildet ist zum Ausgeben von Zeitkosten, die der jeweiligen Route zwischen dem vorgegebenen Startpunkt und dem vorgegebenen Zielpunkt zugeordnet sind. Dies ermöglicht ein noch genaueres Abschätzen der Kosten für die jeweilige Route.

In diesem Zusammenhang ist es ferner vorteilhaft, wenn die Navigationsvorrichtung ausgebildet ist zum Ausgeben von Betriebskosten, die der jeweiligen Route zwischen dem vorgegebenen Startpunkt und dem vorgegebenen Zielpunkt zugeordnet sind. So können die Kosten für die jeweilige Route noch genauer abgeschätzt werden.

Gemäß eines zweiten Aspekts der Erfindung, zeichnet sich diese aus durch ein Navigationssystem, das die erfindungsgemäße Navigationsvorrichtung und eine Mautermittlungsvorrichtung umfasst, die ausgebildet ist zum Mitteilen von Mautnutzerdaten an eine Mautbetreibervorrichtung und die ausgebildet ist zum Mitteilen von Mautdaten an die Navigationsvorrichtung.

Das Navigationssystem kann entsprechend der Navigationsvorrichtung weitergebildet sein und hat die gleichen Vorteile wie die erfindungsgemäße Navigationsvorrichtung oder entsprechend eine ihrer vorteilhaften Ausgestaltungen.

In einer vorteilhaften Ausgestaltung des Navigationssystems ist eine Ortsbestimmungsvorrichtung sowohl der Navigationsvorrichtung als auch der Mautermittlungsvorrichtung zugeordnet. Auf diese Weise kann somit die Ortsbestimmungsvorrichtung sowohl für die Navigationsvorrichtung als auch für die Mautermittlungsvorrichtung genutzt werden. Beispielsweise kann so der vorgebbare Startpunkt für die jeweilige Route durch einen ermittelten aktuellen Ort in der Ortsbestimmungsvorrichtung automatisch vorgegeben werden.

Ausführungsbeispiele der Erfindung sind im Folgenden anhand der schematischen Zeichnungen beispielhaft erläutert. Es zeigen:

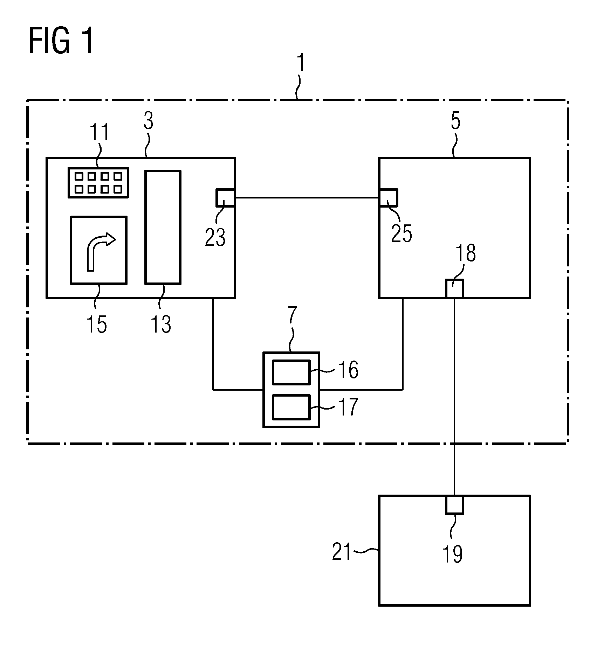

- Figur 1: ein Navigationssystem,
- Figur 2: eine grafische Darstellung zweier Routen und
- Figuren 3 und 4: der ersten und zweiten Route zugeordnete Daten.

Ein Navigationssystem 1 umfasst eine Navigationsvorrichtung 3, eine Mautermittlungsvorrichtung 5 und eine Ortsbestimmungsvorrichtung 7.

Die Navigationsvorrichtung 3 umfasst eine Eingabeeinheit 11, die beispielsweise eine Tastatur oder eine Spracheingabeeinheit umfassen kann. Ferner umfasst die Navigationsvorrichtung 3 eine Rechen- und Speichereinheit 13, in welcher die von der Eingabeeinheit 11 eingegebenen Daten verarbeitet werden. Die Navigationsvorrichtung 3 ist dazu ausgebildet, das über die Eingabeeinheit 11 ein Startpunkt S und ein Zielpunkt Z eingegeben werden können. Der Startpunkt S und der Zielpunkt Z sind geografischer Natur oder beispielsweise ein Punkt von Interesse, wie beispielsweise eine Sehenswürdigkeit oder ein Hotel oder ein Bahnhof oder ein Flughafen, zu dem entsprechende geografische Daten in der Rechen- und Speichereinheit 13 gespeichert sind.

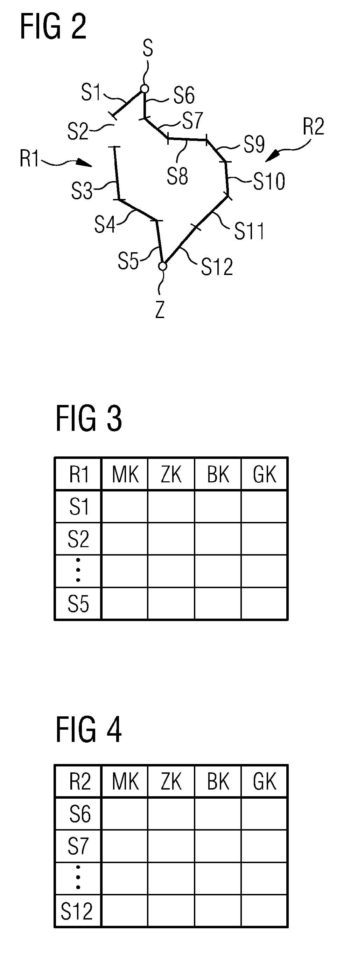

Die Rechen- und Speichereinheit 13 ist ferner ausgebildet zum Ermitteln von Routen R1, R2 von dem Startpunkt hin zu dem Zielpunkt. Zu diesem Zweck sind in der Rechen- und Speichereinheit 13 geografische Koordinaten einzelner Streckenabschnitte S1 - S12 abgespeichert und ferner sind diesen zugeordnete Daten, wie die jeweiligen Zeitkosten ZK oder die jeweiligen Betriebskosten BK gespeichert. Ferner können auch zusätzliche den jeweiligen Streckenabschnitten S1 - S12 zugeordnete Daten in der Rechen- und Speichereinheit 13 gespeichert sein. Zeitkosten ZK können beispielsweise die zu erwartende Zeitdauer für das Befahren des jeweiligen Streckenabschnitts S1 - S12 sein oder es können auch mit dieser jeweiligen Zeitdauer verbundene Kosten, wie beispielsweise Arbeitszeitkosten sein. Betriebskosten BK sind bevorzugt erwartete Kraftstoffkosten für den jeweiligen Streckenabschnitt S1 - S12 und/oder von dem jeweiligen Streckenabschnitt S1 - S12 abhängige Nutzungskosten des jeweiligen Fahrzeugs. Die Rechen- und Speichereinheit 13 ist ferner ausgebildet zum Ermitteln von einer oder mehreren alternativen Routen zwischen dem jeweils vorgegebenen Startpunkt S und dem Zielpunkt Z, was detaillierter unten anhand der Figur 2 beschrieben ist.

Die Navigationsvorrichtung 3 umfasst eine Ausgabeeinheit 15, die ausgebildet ist zum Ausgeben der ermittelten Routen R1, R2 oder einer ausgewählten Route. Die Ausgabeeinheit kann beispielsweis eine optische oder auch akustische Ausgabeeinheit sein. Die Eingabeeinheit 11 und die Ausgabeeinheit 15 können auch kombiniert sein, so z.B. ein Touchscreen sein.

Die bevorzugt sowohl der Navigationsvorrichtung 3 als auch der Mautermittlungsvorrichtung 5 zugeordnete Ortsbestimmungsvorrichtung 7 umfasst eine satellitengestützte Ortsbestimmungseinheit 16 und/oder ein Gyroskop 17 und/oder einen Tachoimpulsgeber, Netzortungsmittel oder einen Bakenempfänger, der Ortungsinformationen externer Baken empfangen kann. Die satellitengestützte Ortsbestimmungseinheit 16 kann beispielsweise ein GPS- oder Galileo-Empfänger sein.

Die Mautermittlungsvorrichtung 5 ist ausgebildet zum Mitteilen von Mautnutzerdaten an eine Mautbetreibervorrichtung. Mautnutzerdaten können beispielsweise Fahrzeugidentifikationsdaten, wie beispielsweise eine Kfz-Nummer, eine Emissionsklasse oder eine Standard-Achsanzahl umfassen. Sie können ferner auch Koordinaten der jeweils befahrenen mautpflichtigen Streckenabschnitte beinhalten. Bevorzugt kann die Mautermittlungsvorrichtung 5 jeweilige aktuelle geografische Position durch entsprechendes Abfragen der in der Ortsbestimmungsvorrichtung 7 bestimmten Position ermitteln.

Entsprechenden Streckenabschnitten S1 - S12 zugeordnete Mautdaten, so insbesondere Mautkosten, können in einem Datenspeicher der Mautermittlungsvorrichtung 5 abgelegt sein. Der Mautermittlungsvorrichtung ist eine erste Kommunikationsschnittstelle 18 zugeordnet, über die sie mit einer zweiten Kommunikationsschnittstelle 19 der Mautbetreibervorrichtung 21 kommunizieren kann. Die ersten und zweiten Kommunikationsschnittstellen 18, 19 können beispielsweise Funkschnittstellen sein und beispielsweise GSM- oder auch GPRS-basierte Kommunikationsschnittstellen sein. Darüber hinaus können es beispielsweise auch satellitengestützte Kommunikationsschnittstellen sein oder die zweite Kommunikationsschnittstelle 19 kann beispielsweise in Funkbaken am Straßenrand mautpflichtiger Streckenabschnitte angeordnet sein oder auch sonstige stationär entlang der mautpflichtigen Streckenabschnitte platzierte Empfangseinheiten sein.

Die Mautbetreibervorrichtung 21 umfasst einen Datenspeicher, in dem die von der jeweiligen Ermittlungsvorrichtung 5 mitgeteilten Mautnutzerdaten gespeichert werden und dann beispielsweise für eine entsprechende Abrechnung von Mautkosten genutzt werden können. Darüber hinaus sind in der Mautbetreibervorrichtung 21 auch regelmäßig Mautdaten gespeichert, die den jeweiligen Streckenabschnitten S1 - S12 zugeordnet sind. Diese sind somit zentral gespeichert und können einfach auf einem aktuellen Stand gehalten werden. Bevorzugt ist die Mautermittlungsvorrichtung 5 ausgebildet zum Abrufen der Mautdaten von der Mautbetreibervorrichtung 21. So können beispielsweise in regelmäßigen Zeitabständen durch Abfrage in der Mautbetreibervorrichtung 21 in der Mautermittlungsvorrichtung 5 gespeicherte Mautdaten aktualisiert werden und entsprechend aktualisierte Mautdaten in der Mautermittlungsvorrichtung 5 gespeichert werden. Alternativ können sowohl die Mautermittlungsvorrichtung 5 als auch die Mautbetreibervorrichtung 21 dazu ausgebildet sein, dass eine Abfrage einzelner, jeweiligen Streckenabschnitten S1 - S12 zugeordneter Mautdaten von der Mautbetreibervorrichtung 21 durch die Mautermittlungsvorrichtung 5 erfolgen kann.

Die Navigationsvorrichtung 3 umfasst eine dritte Kommunikationsschnittstelle 23. Die Mautermittlungsvorrichtung 5 umfasst eine vierte Kommunikationsschnittstelle 25. Die dritten und vierten Kommunikationsschnittstellen 23, 25 sind ausgebildet zum Kommunizieren miteinander und somit können die Navigationsvorrichtung 3 und die Mautermittlungsvorrichtung 5 miteinander kommunizieren. Die dritten und vierten Kommunikationsschnittstellen können beispielsweise funkbasiert sein und z.B. Bluetooth-Schnittstellen sein. Sie können jedoch auch beliebige andere geeignete Kommunikationsschnittstellen sein. So kann auch eine leitungsgebundene Kommunikation zwischen der Navigationsvorrichtung 3 und der Mautermittlungsvorrichtung 5 ausgebildet sein.

Die Mautermittlungsvorrichtung 5 und die Navigationsvorrichtung 3 können unabhängig voneinander in dem Fahrzeug angeordnet sein, sie können jedoch auch in einem gemeinsamen Gehäuse angeordnet sein und so kann beispielsweise auch die Eingabeeinheit 11 und die Ausgabeeinheit 15 sowohl der Navigationsvorrichtung 3 als auch der Mautermittlungsvorrichtung 5 zugeordnet sein.

Die Navigationsvorrichtung 3 ist ausgebildet zum Abfragen von Mautdaten von der Mautermittlungsvorrichtung 5. Die jeweils von der Navigationsvorrichtung 3 abgefragten Mautdaten können entweder in dem Datenspeicher der Mautermittlungsvorrichtung gespeichert sein oder wiederum durch die Mautermittlungsvorrichtung 5 von der Mautbetreibervorrichtung 21 abgefragt werden.

In Figur 2 sind zwei Routen R1 und R2 dargestellt. Die Rechen- und Speichereinehit 13 ist ausgebildet zum Ermitteln der Routen R1, R2 abhängig von dem jeweils vorgegebenen Startpunkt S und Zielpunkt Z. Der Startpunkt S kann über die Eingabeeinheit 11 eingegebenen werden. Er kann jedoch auch einer aktuellen geografischen Position entsprechen, die in der Ortsbestimmungsvorrichtung 7 bestimmt worden ist. Der Zielpunkt Z wird bevorzugt über die Eingabeeinheit 11 eingegeben.

Die Rechen- und Speichereinheit ist ausgebildet zum Ermitteln der Routen abhängig von dem Start- und Zielpunkt S, Z. Dies erfolgt abhängig von den in dem Datenspeicher abgelegten Streckenabschnitten S1 - S12 und ihren entsprechend zugeordneten geografischen Daten. Die Rechen- und Speichereinheit 13 kann so mögliche Routen R1, R2 zwischen dem vorgegebenen Startpunkt S und dem vorgegebenen Zielpunkt Z ermitteln. Die möglichen Routen können über die Ausgabeeinheit 15 für den Nutzer ausgegeben werden, so bevorzugt grafisch anhand einer Karte dargestellt werden. Darüber hinaus können den jeweiligen Streckenabschnitten S1 - S5, S6 - S12 der jeweiligen Routen R1, R2 zugeordnete Daten ebenfalls über die Ausgabeeinheit 15 ausgegeben werden.

Diese Daten umfassen Mautkosten MK, die den jeweiligen Streckenabschnitten S1 bis S5 zugeordnet sind. Sie können jedoch auch andere Mautdaten als die Mautkosten umfassen. Darüber hinaus können auch die Mautkosten gegebenenfalls zeitabhängig sein und entsprechend ausgegeben werden.

Selbstverständlich können auch mehr als zwei Routen R1, R2 zwischen dem jeweiligen vorgegebenen Startpunkt S und dem jeweiligen vorgegebenen Zielpunkt Z ermittelt werden, wobei dies auch abhängt von der Anzahl der möglichen Routen zwischen den beiden Punkten.

Ferner können auch noch den jeweiligen Streckenabschnitten S1 - S12 zugeordnete Zeitkosten ZK über die Ausgabeeinheit 15 ausgegeben werden. Die Zeitkosten ZK können beispielsweise die jeweilige zu erwartende Zeitdauer für das Abfahren des jeweiligen Streckenabschnitts S1 - S12 sein. Darüber hinaus können über die Ausgabeeinheit 15 auch die den jeweiligen Streckenabschnitten S1 bis S5, S6 bis S12 der jeweiligen Route R1, R2 zugeordneten Betriebskosten BK ausgegeben werden. Die Betriebskosten sind bevorzugt voraussichtliche Kraftstoffkosten für den jeweiligen Streckenabschnitt S1 - S5, S6 - S12 oder auch streckenabhängige Nutzungskosten des Fahrzeugs. Darüber hinaus oder auch alternativ können aus den Mautkosten MK und/oder Zeitkosten und/oder Betriebskosten resultierende Gesamtkosten GK für den jeweiligen Streckenabschnitt S1 - S5, S6 - S12 oder auch für die gesamte Route R1, R2 über die Ausgabeeinheit 15 ausgegeben werden. Darüber hinaus oder alternativ können auch die Mautkosten MK und/oder Zeitkosten ZK und/oder Betriebskosten BK gesamt für die jeweilige Route R1 oder R2 ausgegeben werden über die Ausgabe- einheit 15.

Ferner kann die Rechen- und Speichereinheit 13 dazu ausgebildet sein, automatisch eine von mehreren möglichen Routen R1, R2 zwischen dem vorgegebenen Startpunkt S und dem vorgegebenen Zielpunkt Z unter Berücksichtigung von Mautdaten automatisch zu wählen. Dies kann beispielsweise dadurch erfolgen, dass die Mautkosten MK für die jeweiligen ermittelten Routen R1, R2 summiert werden und diejenige Route R1, R2 ausgewählt wird, welcher die niedrigsten Mautkosten zugeordnet sind. Zusätzlich können jedoch auch bei der Auswahl der jeweiligen Route auch andere streckenabschnittsbezogene Daten berücksichtigt werden, wie beispielsweise die Zeitkosten und/oder die Betriebskosten und/oder die Gesamtkosten. Darüber hinaus können auch Verkehrsinformationen bei der Auswahl der jeweiligen Route R1, R2 berücksichtigt werden. Eine Festlegung, nach welchen Kriterien eine Auswahl der jeweiligen Route R1, R2 erfolgen soll, kann auch durch den Nutzer der Navigationsvorrichtung vorgebbar sein.

## Patentansprüche

1. Navigationsvorrichtung, die ausgebildet ist
- zum Ermitteln einer Route (R1, R2), zwischen einem vorgebbaren Startpunkt (S) und einem vorgebbaren Zielpunkt (Z),
- zum Abfragen von Mautdaten bezüglich der ermittelten Route (R1, R2) von einer Mautermittlungsvorrichtung (5), die ausgebildet ist zum Mitteilen von Mautnutzerdaten an eine Mautbetreibervorrichtung (21) und die ausgebildet ist zum Mitteilen von Mautdaten an die Navigationsvorrichtung (3).

2. Navigationsvorrichtung nach Anspruch 1, die ferner ausgebildet ist zum automatischen Auswählen einer von mehreren möglichen Routen (R1, R2) zwischen dem vorgegebenen Startpunkt (S) und dem vorgegebenen Zielpunkt (Z) unter Berücksichtigung von Mautdaten.

3. Navigationsvorrichtung nach Anspruch 2, die ausgebildet ist zum automatischen Auswählen einer von mehreren möglichen Routen (R1, R2) zwischen dem vorgegebenen Startpunkt (S) und dem vorgegebenen Zielpunkt (Z) unter Berücksichtigung von Zeitkosten (ZK).

4. Navigationsvorrichtung nach einem der Ansprüche 2 oder 3,
die ausgebildet ist zum automatischen Auswählen einer von mehreren möglichen Routen (R1, R2) zwischen dem vorgegebenen Startpunkt (S) und dem vorgegebenen Zielpunkt (Z) unter Berücksichtigung von Betriebskosten (BK).

5. Navigationsvorrichtung nach einem der vorstehenden Ansprüche, die ausgebildet ist zum Ausgeben von Mautdaten, die der jeweiligen Route (R1, R2) zwischen dem vorgegebenen Startpunkt (S) und dem vorgegebenen Zielpunkt (Z) zugeordnet sind.

6. Navigationsvorrichtung nach Anspruch 5, die ausgebildet ist zum Ausgeben von Zeitkosten (ZK), die der jeweiligen Route (R1, R2) zwischen dem vorgegebenen Startpunkt (S) und dem vorgegebenen Zielpunkt (Z) zugeordnet sind.

7. Navigationsvorrichtung nach Anspruch 5 oder 6, die ausgebildet ist zum Ausgeben von Betriebskosten (BK), die der jeweiligen Route (R1, R2) zwischen dem vorgegebenen Startpunkt (S) und dem vorgegebenen Zielpunkt (Z) zugeordnet sind.

8. Navigationssystem, das die Navigationsvorrichtung gemäß einem der vorstehenden Ansprüche und eine Mautermittlungsvorrichtung (5) umfasst, die ausgebildet ist zum Mitteilen von Mautnutzerdaten an eine Mautbetreibervorrichtung (21) und die ausgebildet ist zum Mitteilen von Mautdaten an die Navigationsvorrichtung (3).

9. Navigationssystem nach Anspruch 8,
bei dem eine Ortsbestimmungsvorrichtung (7) sowohl der Navigationsvorrichtung (3) als auch der Mautermittlungsvorrichtung (5) zugeordnet ist.
